# EUROPEAN PATENT APPLICATION

(11) **EP 4 270 717 A1**
(43) Date of publication of application: **01.11.2023**
(21) Application number: 20966909.2
(22) Date of filing: 24.12.2020
(51) Int. Cl.: H02J 7/00, H02J 3/32, H02J 3/38

(54) **POWER STORAGE SYSTEM AND GRID CONTROL SYSTEM**

(71) Applicant: MITSUBISHI ELECTRIC CORPORATION, Chiyoda-ku Tokyo 100-8310 (JP)
(72) Inventor: ISHIHARA, Hiroki, Tokyo 100-8310 (JP)
(74) Representative: Meissner Bolte Partnerschaft mbB
(86) International application number: PCT/JP2020/048423
(87) International publication number: WO 2022/137420

(57) **Abstract**

In an energy storage system (1) connected to a power line (100) of a power grid, electric energy is input and output to and from at least one energy storage device (10). At least one power converter (20) is provided between the power line (100) and the at least one energy storage device (10). A power detector (40) detects active power flowing through the power line (100). A control unit (30) controls an operation of the at least one power converter (20), thereby causing active power either to be output from the at least one energy storage device (10) to the power line (100) or to be input to the at least one energy storage device (10) from the power line (100) such that a variation in active power detected by the power detector (40) is compensated.

## Description

### TECHNICAL FIELD

The present invention relates to an energy storage system and a grid control system.

### BACKGROUND ART

With the spread of renewable energy in the future, it is expected that the number of thermal power generators decreases and the inertia of the power grid decreases more and more in the future. When a failure such as dropout of a generator occurs in a power grid with low inertia, the frequency rapidly drops, and as a result, simultaneous parallel-off of inverters connected to the power grid occurs, which may eventually lead to a large-scale power outage.

As a countermeasure for the above, an energy storage system has been proposed in which active power is output to a power grid from an energy storage device that stores electric energy to suppress a decrease in frequency.

Japanese Patent JP 6 232 899 B2 (PTL 1) discloses a power compensation device using a storage battery. Specifically, the power compensation device of this document calculates a command value of active power to be absorbed into or released from the storage battery based on deviation between a detected frequency value and a target frequency value of the power grid. Further, the power compensation device changes a control constant for performing compensation for suppressing variation of a grid frequency based on an absolute value or a change rate of the frequency deviation, and thereby prevents excessive compensation for suppressing variation and reduces power loss.

### CITATION LIST

### PATENT LITERATURE

PTL 1: Japanese Patent JP 6 232 899 B2

### SUMMARY OF INVENTION

### TECHNICAL PROBLEM

In the case of the method as disclosed in the above document, that is, the method of increasing an output of the active power as the deviation between the detected frequency value and the target frequency value increases, it is difficult to instantaneously supply the active power immediately after the occurrence of the failure such as dropout of a generator. As a result, the grid frequency is significantly lowered due to the delay of the supply of the active power, which may lead to a large-scale power outage.

This invention has been made in consideration of the above problems. An object of one aspect is to provide an energy storage system capable of rapidly supplying or absorbing active power even when an imbalance occurs between supply and demand of electric power that causes a steep variation of the grid frequency.

### SOLUTION TO PROBLEM

In an energy storage system connected to a power line of a power grid, electric energy is input and output to and from at least one energy storage device. At least one power converter is provided between the power line and the at least one energy storage device. A power detector detects active power flowing through the power line. A control unit controls an operation of the at least one power converter, thereby causing active power either to be output from the at least one energy storage device to the power line or to be input to the at least one energy storage device from the power line such that a variation in active power detected by the power detector is compensated.

### ADVANTAGEOUS EFFECTS OF INVENTION

According to the energy storage system of the above embodiment, the active power is caused either to be output from the at least one energy storage device to the power line or to be input to the at least one energy storage device from the power line such that a variation in active power detected by the power detector is compensated. As a result, it is possible to rapidly supply or absorb active power even when an imbalance occurs between supply and demand of electric power that causes a steep variation of the grid frequency.

### BRIEF DESCRIPTION OF DRAWINGS

FIG. 1 is a block diagram illustrating a schematic configuration of an energy storage system according to a first embodiment.
FIG. 2 is a block diagram illustrating an example of a hardware configuration of a power detector of FIG. 1.
FIG. 3 is a block diagram illustrating an example of a hardware configuration of a control unit of FIG. 1.
FIG. 4 is a flowchart showing an operation of the energy storage system of FIG. 1.
FIG. 5 is a block diagram illustrating a modified example of an energy storage system 1 of FIG. 1.
FIG. 6 is a block diagram illustrating an example of a functional configuration of a control unit of the energy storage system of a second embodiment.
FIG. 7 is a block diagram illustrating an example of a more detailed functional configuration of a command value generation unit of FIG. 6.
FIG. 8 is a diagram for conceptually illustrating an operation of the command value generation unit of FIG. 7.
FIG. 9 is a diagram illustrating a configuration example of an energy storage system including n sets of energy storage devices and power converters.
FIG. 10 is a flowchart showing an operation of the energy storage system of the second embodiment.
FIG. 11 is a diagram illustrating a simulation result of a time variation of a frequency when a part of a generator is dropped in a power transmission system including the generator, a load, and the energy storage system.
FIG. 12 is a diagram illustrating a simulation result of a temporal change of active power output from the energy storage system under the same conditions as in FIG. 11.
FIG. 13 is a block diagram illustrating a schematic configuration of an energy storage system according to a third embodiment.
FIG. 14 is a block diagram illustrating an example of a functional configuration of a command value generation unit 50 of FIG. 6 in the energy storage system of the third embodiment.
FIG. 15 is a flowchart showing an operation of the energy storage system of the third embodiment.
FIG. 16 is a block diagram illustrating an example of a configuration of a grid control system.
FIG. 17 is a block diagram illustrating an example of a hardware configuration of a centralized control device of FIG. 16.
FIG. 18 is a block diagram illustrating an example of a functional configuration of the centralized control device of FIG. 16.
FIG. 19 is a flowchart showing an example of an operation of a dead band width setting unit of FIG. 18.
FIG. 20 is a flowchart showing another example of the operation of the dead band width setting unit of FIG. 18.

### DESCRIPTION OF EMBODIMENTS

Hereinafter, embodiments will be described in detail with reference to the drawings. The same or corresponding parts are denoted by the same reference numerals, and descriptions thereof will not be repeated.

### First Embodiment

### [Schematic configuration of energy storage system]

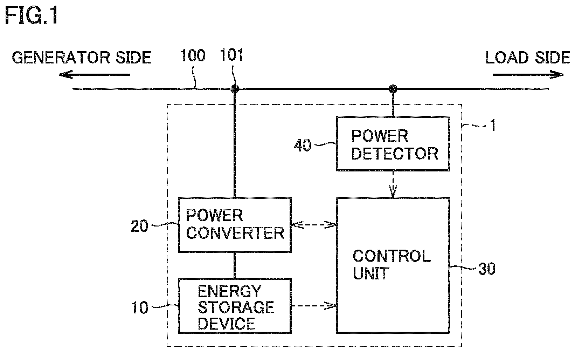

FIG. 1 is a block diagram showing a schematic configuration of an energy storage system according to a first embodiment.

Referring to FIG. 1, an energy storage system 1 includes an energy storage device 10, a power converter 20, a power detector 40, and a control unit 30. Energy storage system 1 is interconnected to a power line 100. Power line 100 may be a power transmission line or a power distribution line. In FIG. 1, power line 100 is indicated by one line for ease of illustration, but actually, power lines corresponding to phases of a three-phase AC system are provided.

Energy storage device 10 stores electric energy and releases the stored electric energy. Energy storage device 10 may be, for example, a storage battery such as a lithium ion secondary battery, a sodium-sulfur battery, a redox flow battery, a lead-acid battery, or a nickel hydrogen battery, may be a flywheel or the like that converts electric energy into kinetic energy to store the kinetic energy, or may be a large-capacity capacitor such as an electric double layer capacitor or a lithium-ion capacitor. Further, energy storage device 10 may be configured by connecting a plurality of storage batteries or a plurality of large-capacity capacitors in series and in parallel.

Power converter 20 is connected between power line 100 and energy storage device 10, and performs forward conversion for converting alternating current (AC) into direct current (DC) and inverse conversion for converting direct current into alternating current. More specifically, power converter 20 converts AC power flowing through power line 100 into DC power, and charges energy storage device 10 with the DC power. Conversely, power converter 20 converts DC power discharged from energy storage device 10 into AC power, and outputs the AC power to power line 100.

Power converter 20 includes a plurality of semiconductor switches and operates in accordance with an on/off command of the semiconductor switches received from control unit 30. Power converter 20 may be a self-excited converter including a semiconductor switch having self-extinguishing capability, or may be a separately-excited converter, such as a thyristor, including a semiconductor switch not having self-extinguishing capability. Examples of a type of the self-excited converter include a two-level type, a three-level type, and a modular multilevel converter (MMC) type. A circuit configuration of power converter 20 is not particularly limited.

Power detector 40 detects power flowing through power line 100. In the case of FIG. 1, power detector 40 detects power flowing from an interconnection point 101 between power converter 20 and power line 100 to a downstream side (load side) of power line 100.

In FIG. 1, an upstream side of power line 100 is referred to as a generator side, and the downstream side is referred to as a load side. The terms "generator side" and "load side" are used for convenience based on the direction of power flow, and in practice, generators may be connected to power networks on both sides of power line 100.

Based on the active power detected by power detector 40, control unit 30 controls an operation of power converter 20 so as to release or absorb the active power that compensates for an increase or a decrease in the detected active power. As a result, it is possible to compensate for an imbalance between supply and demand of electric power that causes a grid frequency variation.

Specifically, control unit 30 generates a commanded active power value and controls power converter 20 based on the generated commanded active power value. For example, in the case of a self-excited converter, control unit 30 generates a commanded active voltage value based on a deviation between a commanded active current value calculated from the commanded active power value and a measured active current value detected from power line 100. Similarly, control unit 30 generates a commanded reactive voltage value based on a deviation between the commanded reactive current value calculated from the commanded reactive power value and the measured reactive current value detected from power line 100. The commanded reactive power value is, for example, 0. Next, control unit 30 generates a commanded voltage value of each phase of a three-phase AC system by performing two-phase/three-phase conversion on the commanded active voltage value and the commanded reactive voltage value. Control unit 30 performs pulse width modulation (PWM) control of the switching elements constituting power converter 20 based on the generated commanded voltage value of each phase.

### [Examples of hardware configurations of power detector and control unit]

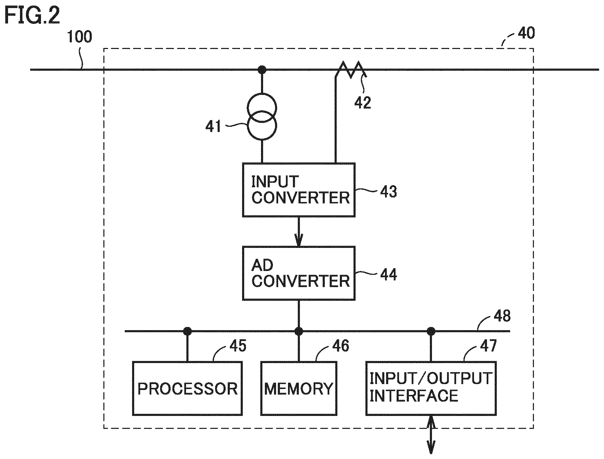

FIG. 2 is a block diagram illustrating an example of a hardware configuration of the power detector of FIG. 1. Referring to FIG. 2, power detector 40 includes a voltage transformer 41, a current transformer 42, an input converter 43, an analog-to-digital (AD) converter 44, a processor 45, a memory 46, and an input/output interface 47. Among the above components, AD converter 44, processor 45, memory 46, and input/output interface 47 are mutually connected via a bus 48.

Hereinafter, the above-described components of power detector 40 will be briefly described. Voltage transformer 41 outputs a voltage signal corresponding to an instantaneous value of the AC voltage of power line 100. Current transformer 42 outputs a current signal corresponding to an instantaneous value of the AC current flowing through power line 100. Input converter 43 includes an auxiliary transformer for converting a voltage level of the voltage signal and the current signal, and a low-pass filter or a bandpass filter for removing high-frequency components in the voltage signal and the current signal. AD converter 44 converts each of the voltage signal and the current signal converted by input converter 43 into digital data.

Processor 45 calculates active power and reactive power flowing through power line 100 based on voltage data and current data that have been detected. Processor 45 may be, for example, any of a central processing unit (CPU), a dedicated logic circuit such as an application specific integrated circuit (ASIC), a field programmable gate array (FPGA), and a combination of two or more of these.

Memory 46 stores data, programs, and the like that are used by processor 45. For example, the voltage data and current data that have been detected and the active power and the reactive power that have been calculated are stored in memory 46. Memory 46 includes a volatile memory and a nonvolatile memory. Examples of the volatile memory include a dynamic random access memory (DRAM) and a static RAM (SRAM). Examples of the nonvolatile memory include an electrically erasable programmable read-only memory (EEPROM), and a flash memory.

Input/output interface 47 is a circuit for exchanging signals with an external circuit, and performs input/output separation, level adjustment, timing adjustment, and the like. For example, input/output interface 47 transmits, in accordance with a command of processor 45, the voltage data, the current data, and the calculated values of the active power and the reactive power to an input/output interface 33 of control unit 30 described later.

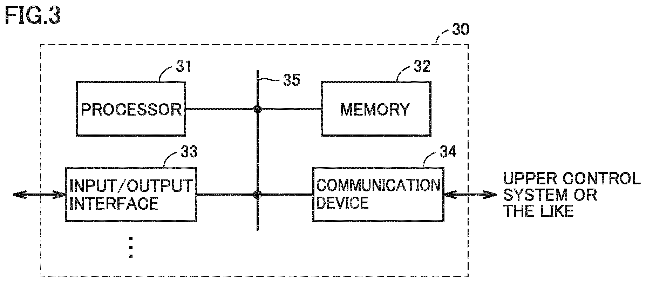

FIG. 3 is a block diagram showing an example of a hardware configuration of a control unit of FIG. 1. Referring to FIG. 3, control unit 30 includes a processor 31, a memory 32, input/output interface 33, a communication device 34, and a bus 35 that interconnects these components.

Processor 31 may be any of a CPU, a dedicated logic circuit such as an ASIC, and an FPGA, and may be a combination of two or more of these. A function of control unit 30 is implemented by the CPU as processor 31 executing a program, or by the ASIC or the FPGA operating.

Memory 32 stores data, programs, and the like that are used by processor 31. Memory 32 includes a volatile memory and a nonvolatile memory. Examples of the volatile memory include DRAM and SRAM, and examples of the nonvolatile memory include EEPROM and a flash memory. Further, memory 32 may include a solid state drive (SSD) or a hard disk.

Input/output interface 33 is a circuit for exchanging signals with an external circuit, and performs input/output separation, level adjustment, timing adjustment, and the like. Communication device 34 transmits and receives information to and from an upper control system or the like. A communication line between communication device 34 and the upper control system may be wired or wireless.

Processor 31 and memory 32 of control unit 30 shown in FIG. 3 are also respectively able to serve as processor 45 and memory 46 of power detector 40 of FIG. 2. In this case, bus 48 in FIG. 2 and bus 35 in FIG. 3 are common.

### [Operation of energy storage system]

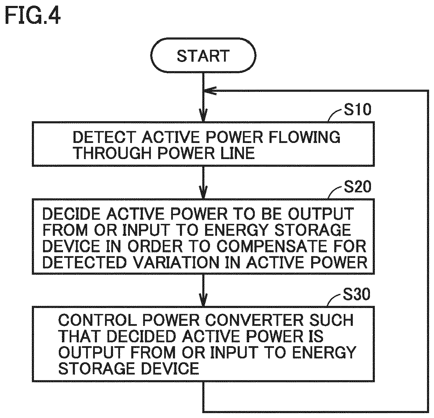

FIG. 4 is a flowchart showing an operation of the energy storage system in FIG. 1. Hereinafter, with reference to FIGS. 1 and 4, an operation of energy storage system 1 of the first embodiment will be described as a summary of the above description.

In step S10 of FIG. 4, power detector 40 detects an active power flowing through power line 100.

In subsequent step S20, control unit 30 determines active power to be output from energy storage device 10 or input to energy storage device 10 in order to compensate for the detected variation in the active power.

In subsequent step S30, control unit 30 controls power converter 20 such that the determined active power is output from energy storage device 10 to power line 100 or input from power line 100 to energy storage device 10. Hereinafter, steps S10 to S30 described above are repeated.

### [Effects of first embodiment]

First, problems of the conventional art will be described. When a balance between demand and supply of the active power is lost, in general, the excess or deficiency is compensated by the characteristics of the rotary machine of the generator. For example, when the demand for the active power exceeds the supply, the rotational energy of the rotary machine of the generator is converted into the active power and the power is supplied, so that the frequency of the power grid gradually decreases. In general, a difference between demand and supply of the active power is compensated using a governor system control of the generator, but it often takes 10 or more seconds for the response of the mechanical input of the generator. In addition, in a governor system, there is a limit to the active power to be supplied.

When the number of distributed power supply based on renewable energy increases in the power grid, it is assumed that the number of generators relatively decreases. When the number of generators in the power grid decreases, an inertia of a rotary machine decreases, and thus the grid frequency varies more steeply. Therefore, it is difficult to suppress the variation of the grid frequency only by the governor system control of the generator.

As a case where the active power flowing through the power transmission line greatly changes, there may be a situation in which some generators drop out due to a failure. The active power does not flow from a dropping generator to the load, and the demand for the active power exceeds the supply by a relatively large amount. When the number of generators in the power grid is small, the grid frequency sharply decreases. When the grid frequency decreases, distributed power supplies such as a photovoltaic power system and a wind power system are paralleled-off, and the supply of active power further decreases. As a result, the grid frequency further decreases, and the generators connected to the power grid drop out one after another, which may cause a large-scale power outage. Therefore, in order to suppress the variation of the grid frequency, a system for outputting active power to the power grid or absorbing active power from the power grid is required.

However, in the case of the method of increasing an output of the active power as the deviation between the detected frequency value and the target frequency value increases as in PTL 1 (Japanese Patent No. 6232899) described herein before, it is difficult to instantaneously supply the active power immediately after the occurrence of a failure such as dropout of a generator. This is because the grid frequency depends on an integral value of the balance between supply and demand of the active power, and thus the variation of the grid frequency is slower than the variation of the active power.

On the other hand, in energy storage system 1 of the first embodiment, the active power is output from energy storage device 10 to the power grid or the active power is input from the power grid to energy storage device 10 so as to compensate for the detected variation in the active power of the power grid. Therefore, it is possible to rapidly supply or absorb active power even when an imbalance occurs between supply and demand of electric power that causes a steep variation of the grid frequency.

In addition, in a case where a plurality of power compensation devices is provided in the power grid, the plurality of power compensation devices simultaneously supplies the active power to the power grid by a similar method. In this case, when the active power to be input and output is determined according to the frequency deviation of the power grid, demand and supply of the power cannot be balanced, and the power grid may fall into an unstable state. On the other hand, in the case of the present embodiment, since the active power can be quickly supplied or absorbed so as to compensate for the variation in the active power of the power grid, there is little possibility that the power grid falls into an unstable state.

### [Modified example]

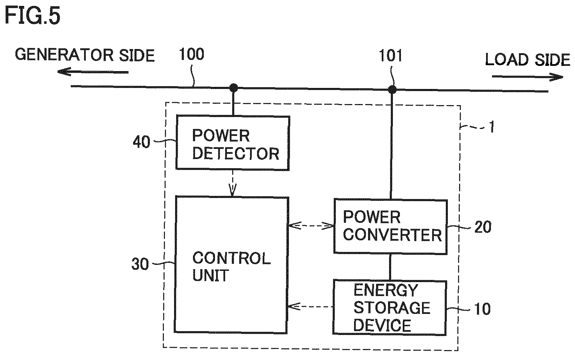

FIG. 5 is a block diagram illustrating a modified example of energy storage system 1 of FIG. 1. Energy storage system 1 in FIG. 5 is different from energy storage system 1 in FIG. 1 in a position at which the active power is detected by power detector 40.

Specifically, power detector 40 of energy storage system 1 in FIG. 1 detects the active power flowing from interconnection point 101 of power converter 20 to the downstream side (load side) of power line 100. On the other hand, power detector 40 of energy storage system 1 in FIG. 5 is different from that in FIG. 1 in that the active power flowing from the upstream side (generator side) of power line 100 to interconnection point 101 of power converter 20 is detected.

Although the effect of energy storage system 1 is basically the same even if the position at which the active power is detected is different, the case of FIG. 5 is superior in the following points. Specifically, as shown in FIG. 1, when the active power flowing on the downstream side from interconnection point 101 of power converter 20 is detected, the detected value includes the value of the active power output from power converter 20 or input to power converter 20. However, since energy storage system 1 needs to compensate for the variation of the original active power flowing through power line 100, the active power output from energy storage system 1 or input to energy storage system 1 is unnecessarily added or subtracted. Therefore, it is considered that the configuration of FIG. 5 in which an influence of the active power output from energy storage system 1 or input to energy storage system 1 is smaller is more suitable.

Another modified example in consideration of the above problem will be described in a third embodiment. As described later, in energy storage system 1 of the third embodiment, active power is detected on both sides of interconnection point 101 of power converter 20.

### Second Embodiment

In a second embodiment, a case where a dead band is provided for the detection value of the variation amount of the active power will be described. As a result, energy storage system 1 compensates the active power from energy storage system 1 only when the active power flowing through power line 100 rapidly varies and exceeds the dead band width.

Hereinafter, a specific description will be given with reference to the drawings. Since the hardware configuration of energy storage system 1 described in the first embodiment is also appropriate in the case of the second embodiment, the description thereof will not be repeated.

### [Functional configuration of control unit]

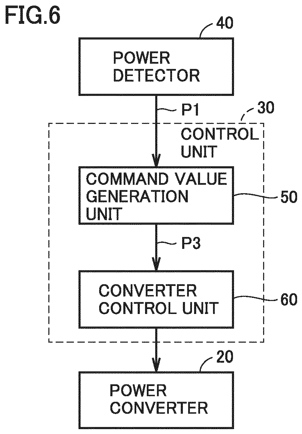

FIG. 6 is a block diagram showing an example of a functional configuration of a control unit of the energy storage system of the second embodiment.

Referring to FIG. 6, control unit 30 functionally includes a command value generation unit 50 and a converter control unit 60. These functions are realized, for example, when the CPU as processor 31 constituting control unit 30 operates in accordance with a program.

Command value generation unit 50 receives a detected active power value P1 from power detector 40. Based on detected active power value P1, command value generation unit 50 generates a commanded active power value P3 for controlling power converter 20 of energy storage system 1.

Converter control unit 60 controls the operation of power converter 20 so that the active power output from energy storage device 10 or input to energy storage device 10 becomes equal to commanded active power value P3.

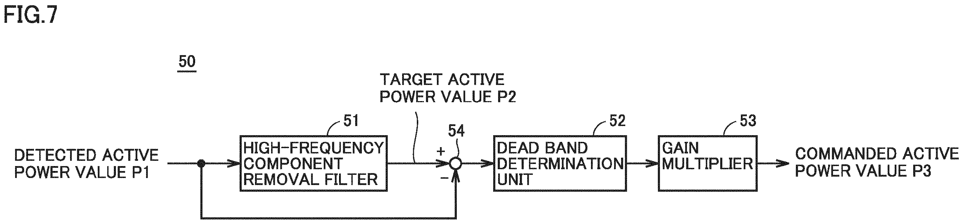

FIG. 7 is a block diagram illustrating an example of a more detailed functional configuration of the command value generation unit of FIG. 6. As illustrated in FIG. 7, command value generation unit 50 includes a high-frequency component removal filter 51, a subtractor 54, a dead band determination unit 52, and a gain multiplier 53.

High-frequency component removal filter 51 removes a high frequency component from detected active power value P1 detected by power detector 40. Detected active power value P1 from which the high frequency component has been removed is set as a target active power value P2. High-frequency component removal filter 51 removes, for example, at least a part of a frequency component higher than a fundamental wave component of a power grid. As high-frequency component removal filter 51, for example, a low-pass filter (LPF) or a moving-average filter is used.

Subtractor 54 calculates a deviation Δ by subtracting detected active power value P1 from target active power value P2. Calculated deviation Δ is input to dead band determination unit 52.

When deviation Δ that has been calculated exceeds the dead band width, dead band determination unit 52 generates the commanded active power value so as to reduce an absolute value of deviation Δ. Gain multiplier 53 calculates final commanded active power value P3 by multiplying the generated commanded active power value by the gain. For example, when the gain is 1, commanded active power value P3 is set equal to deviation Δ that has been calculated.

According to the above configuration, even in a situation where the value of the active power flowing through power line 100 changes from moment to moment, energy storage system 1 does not input or output the active power input/output except for a case where a steep and large-scale active power change occurs. Adjustment of the balance between supply and demand of the slow or small-scale active power is performed by increasing or decreasing the mechanical input of the generator, the storage battery associated with each distributed power supply, and the like.

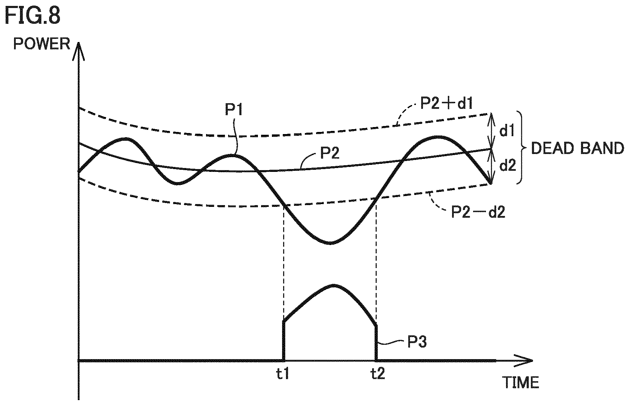

FIG. 8 is a diagram for conceptually illustrating the operation of the command value generation unit of FIG. 7. FIG. 8 illustrates a temporal change of detected active power value P1 and a temporal change of target active power value P2 obtained by removing the high frequency component from detected active power value P1.

Command value generation unit 50 outputs commanded active power value P3 when detected active power value P1 exceeds an upper limit value (that is, P2 + d1) obtained by adding the upper dead band width d1 to target active power value P2 or when detected active power value P1 falls below a lower limit value (that is, P2 - d2) obtained by subtracting lower dead band width d2 from target active power value P2. In the case of FIG. 8, since detected active power value P1 is below the lower limit value (that is, P2 - d2) from time t1 to time t2, command value generation unit 50 outputs deviation Δ between target active power value P2 and detected active power value P1 as commanded active power value P3.

An upper dead band width d1 and lower dead band width d2 can be set to predetermined values in advance, or can be changed according to the value of the active power flowing through power line 100. For example, control unit 30 may change upper dead band width d1 and lower dead band width d2 according to a change in target active power value P2 detected by power detector 40. Alternatively, upper dead band width d1 and lower dead band width d2 may be set from the upper control system.

Specifically, it is considered that the demand for the active power relatively decreases in the power grid in which many solar power panels are connected to power line 100 and an amount of the solar power generation in the daytime is large. On the other hand, it is considered that the supply of active power by solar power generation is not expected at night, and the demand for active power relatively increases. As described above, the amount of active power flowing through power line 100 varies depending on the time range. In addition, it is considered that the amount of active power flowing through power line 100 varies depending on weather, climate, or the like. When the demand or the supply of the active power changes, it is assumed that the variation of the active power flowing through the power transmission line changes depending on the amount of the active power flowing before occurrence of the fault.

Therefore, when the active power flowing through power line 100 is large, it is expected that the change in the active power from moment to moment also increases, and it is desirable to relatively increase upper dead band width d1 and lower dead band width d2 in order to prevent the active power from being input and output to and from energy storage system 1 endlessly. On the other hand, when the active power flowing through power line 100 is small, a change in the active power at the time of occurrence of a fault is also expected to be small, and it is desirable to relatively reduce upper dead band width d1 and lower dead band width d2 in order that the active power is quickly input and output to and from energy storage system 1.

### [Modified example of configuration of energy storage system 1]

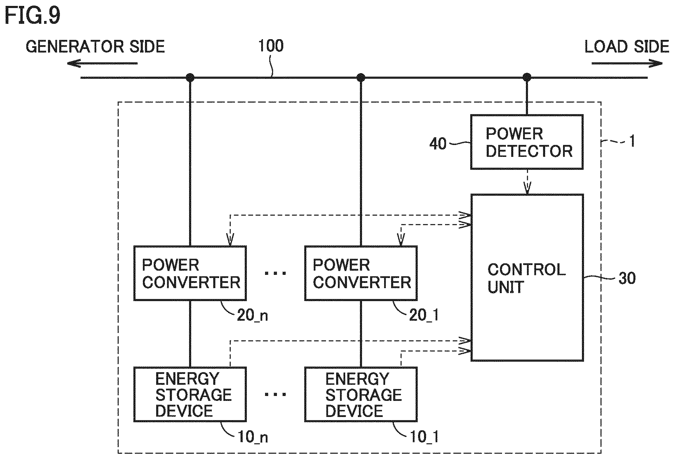

FIG. 9 is a diagram showing a configuration example of an energy storage system including n sets of energy storage devices and power converters. Although FIG. 1 illustrates a set of one energy storage device 10 and one power converter 20 in energy storage system 1, a plurality of sets may be included. In FIG. 9, an i-th (1 ≤ i ≤ n) power converter 20_i is connected to an i-th energy storage device 10_i.

When there are n power converters 20_1 to 20_n, control unit 30 may set the gain of gain multiplier 53 to a reciprocal of the number n of converters (that is, 1/n) and calculate commanded active power value P3 of each power converter 20.

When the rated power capacity is different for each power converter 20, the value of the gain of gain multiplier 53 may be set according to the rated power capacity. For example, the gain of i-th power converter 20_i is set to a value obtained by dividing the rated power capacity of i-th power converter 20_i by a total value of the rated power capacities of the n power converters 20.

The value of the gain of gain multiplier 53 may be set by control unit 30 or may be set from the upper control system.

### [Operation of energy storage system]

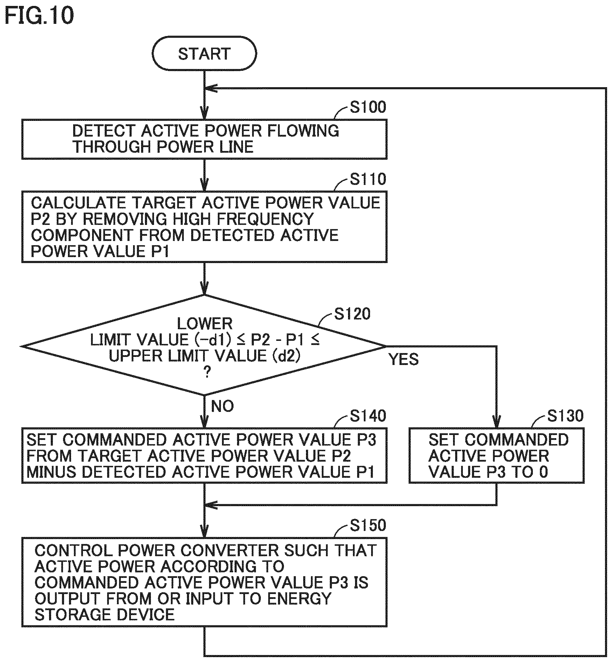

FIG. 10 is a flowchart showing the operation of the energy storage system of the second embodiment. Hereinafter, with reference to FIGS. 7 and 10 and the like, the operation of energy storage system 1 of the second embodiment will be described as a summary of the above description.

In step S100 of FIG. 10, power detector 40 detects an active power flowing through power line 100.

In subsequent step S110, high-frequency component removal filter 51 of control unit 30 calculates target active power value P2 by removing a high frequency component from detected active power value P1.

In subsequent step S120, dead band determination unit 52 of control unit 30 determines whether or not detected active power value P1 is within a range of the dead band width based on target active power value P2. That is, dead band determination unit 52 determines whether or not deviation Δ obtained by subtracting detected active power value P1 from target active power value P2 is in a range equal to or larger than the lower limit value (-d1) and equal to or smaller than the upper limit value (d2).

As a result of the above determination, when deviation Δ is within the dead band width (YES in step S120), control unit 30 sets commanded active power value P3 to 0 (step S130).

On the other hand, when deviation Δ does not fall within the dead band width (NO in step S120), control unit 30 sets commanded active power value P3 from deviation Δ (that is, P2 - P1) (step S140).

In subsequent step S150, converter control unit 60 of control unit 30 controls power converter 20 such that the active power according to commanded active power value P3 is output from energy storage device 10 or input to energy storage device 10. Hereinafter, steps S100 to S150 described above are repeated.

### [Simulation results]

Hereinafter, simulation results of energy storage system 1 of the second embodiment will be described.

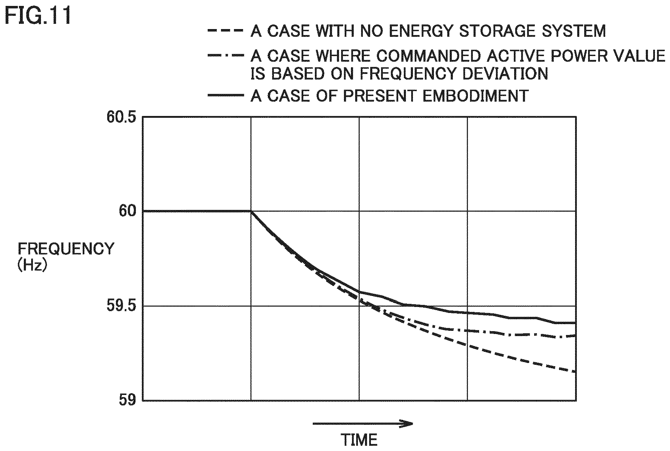

FIG. 11 is a diagram illustrating a simulation result of the time variation of the frequency when some of the generators drop out in the power transmission system including generators, loads, and the energy storage system.

In FIG. 11, a case where there is no energy storage system is indicated by a broken line, a case where the commanded active power value is based on the frequency deviation is indicated by a one-dot chain line, and a case of the present embodiment is indicated by a solid line. Here, the case where the commanded active power value is based on a frequency is a method in which active power is input from the power transmission system to energy storage device 10 and output from energy storage device 10 to the power transmission system, when a difference between a reference frequency and a detected frequency exceeds a dead band range as is often seen in the prior art. Specifically, it is assumed that the reference frequency is 60 Hz, and the dead band range of the frequency is ± 0.5 Hz.

As illustrated in FIG. 11, it can be seen that the variation of the grid frequency can be suppressed most in the case of the present embodiment.

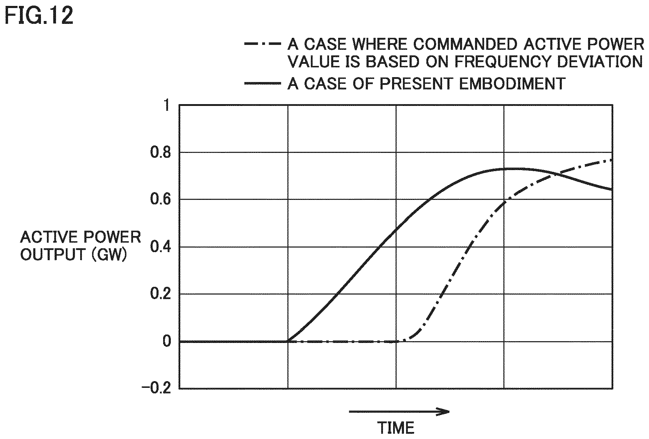

FIG. 12 is a diagram showing a simulation result of a temporal change of the active power output from the energy storage system under the same conditions as in FIG. 11. In

FIG. 12, a case where the commanded active power value is based on the frequency deviation is indicated by an alternate long and short dash line, and a case of the present embodiment is indicated by a solid line.

Referring to FIG. 12, when the commanded active power value is based on the frequency, the active power is not input or output unless the frequency exceeds the dead band range as described above. Therefore, the active power cannot be output unless the grid frequency decreases to some extent. On the other hand, when commanded active power value P3 is calculated according to the present embodiment, if there is a large variation in the active power in the power transmission system, the active power can be quickly output from energy storage system 1. Therefore, as can be seen from FIG. 12, energy storage system 1 of the present embodiment is excellent in that the active power can be quickly input and output when the balance between supply and demand of the active power is lost.

### [Effects of second embodiment]

As described above, according to energy storage system 1 of the second embodiment, when the active power of power line 100 connected to energy storage system 1 changes steeply and greatly and exceeds the dead band width, a part of the active power corresponding to the change can be quickly compensated from energy storage device 10. In addition, by setting the value obtained by removing the high-frequency component from the detected active power value P1 that has been detected as target active power value P2, deviation Δ between target active power value P2 and detected active power value P1 can be gradually decrease after the active power is input and output. As a result, it is not necessary to continuously charge or discharge energy storage device 10, and the operation can be terminated before the state of charge of energy storage device 10 becomes 0% or 100%.

### Third embodiment

In energy storage system 1 of the third embodiment, the active power is detected on both sides of interconnection point 101 of power converter 20. As a result, it is possible to more accurately detect the variation in the active power of power line 100. Hereinafter, a specific description will be given with reference to the drawings.

### [Schematic configuration of energy storage system]

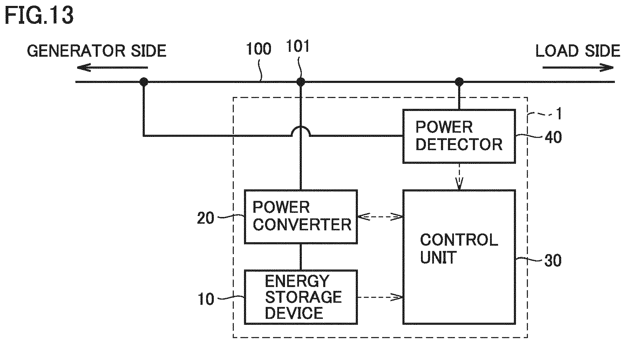

FIG. 13 is a block diagram illustrating a schematic configuration of an energy storage system according to the third embodiment. Power detector 40 of energy storage system 1 in FIG. 13 is different from power detector 40 in FIG. 1 in that active power on both of the upstream side (generator side) and the downstream side (load side) of interconnection point 101 between power converter 20 and power line 100 are detected. Hereinafter, a detected active power value on the upstream side (first side) of interconnection point 101 is referred to as P1A, and a detected active power value on the downstream side (second side) of interconnection point 101 is referred to as P1B.

The other points in FIG. 13 are similar to those in FIG. 1, and thus the description thereof will not be repeated. A hardware configuration of energy storage system 1 of the third embodiment is the same as that of the first embodiment, and the description will not be repeated.

### [Functional configuration of control unit]

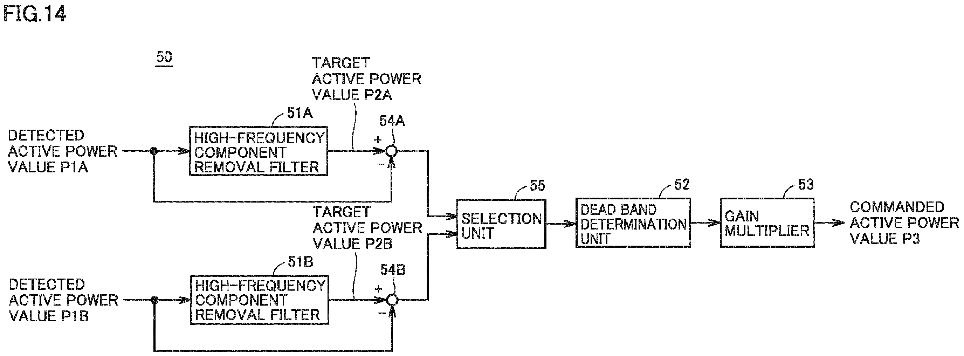

FIG. 14 is a block diagram illustrating an example of a functional configuration of command value generation unit 50 of FIG. 6 in the energy storage system of the third embodiment. Command value generation unit 50 illustrated in FIG. 14 includes high-frequency component removal filters 51A and 51B, subtractors 54A and 54B, a selection unit 55, dead band determination unit 52, and gain multiplier 53.

High-frequency component removal filter 51A removes a high frequency component from detected active power value P1A on the first side detected by power detector 40. Detected active power value P1A from which the high frequency component is removed is set as target active power value P2A. Similarly, high-frequency component removal filter 51B removes a high frequency component from detected active power value P1B on the second side detected by power detector 40. Detected active power value P1B from which the high frequency component is removed is set as target active power value P2B.

Subtractor 54A calculates a deviation ΔA by subtracting detected active power value P1A from target active power value P2A. Calculated deviation ΔA is input to selection unit 55. Similarly, subtractor 54B calculates a deviation ΔB by subtracting detected active power value P1B from target active power value P2B. Calculated deviation ΔB is input to selection unit 55.

Selection unit 55 selects a larger one of absolute values of deviations ΔA and ΔB as active power deviation Δ.

When active power deviation Δ selected by selection unit 55 exceeds the dead band width, dead band determination unit 52 generates the commanded active power value so as to reduce the absolute value of active power deviation Δ. Gain multiplier 53 calculates final commanded active power value P3 by multiplying the generated commanded active power value by the gain.

### [Operation of energy storage system]

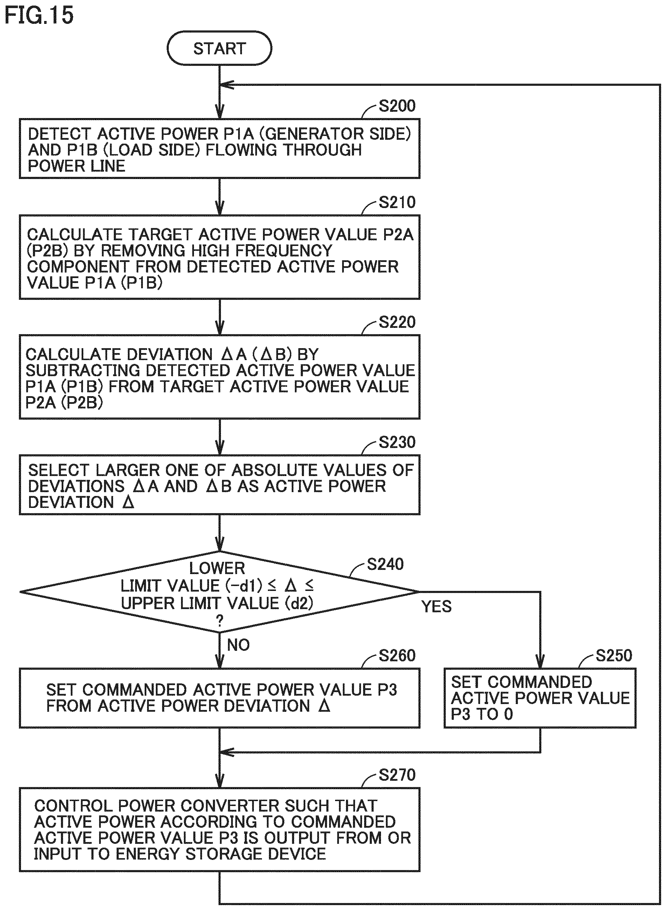

FIG. 15 is a flowchart showing an operation of the energy storage system according to the third embodiment. Hereinafter, with reference to FIGS. 14 and 15 and the like, the operation of energy storage system 1 of the third embodiment will be described as a summary of the above description.

In step S200 of FIG. 15, power detector 40 detects active power P1A flowing on the first side (generator side) of interconnection point 101 between power line 100 and power converter 20, and active power P1B flowing on the second side (load side) of interconnection point 101 between power line 100 and power converter 20.

In subsequent step S210, high-frequency component removal filter 51A of control unit 30 calculates target active power value P2A by removing a high frequency component from detected active power value P1A. Similarly, high-frequency component removal filter 51B of control unit 30 calculates target active power value P2B by removing a high frequency component from detected active power value P1B.

In subsequent step S220, subtractor 54A of control unit 30 calculates deviation ΔA by subtracting detected active power value P1A from target active power value P2A. Similarly, subtractor 54B of control unit 30 calculates deviation ΔB by subtracting detected active power value P1B from target active power value P2B.

In subsequent step S230, selection unit 55 of control unit 30 selects larger one of absolute values of deviations ΔA and ΔB as active power deviation Δ.

In subsequent step S240, dead band determination unit 52 of control unit 30 determines whether or not active power deviation Δ is equal to or larger than the lower limit value (-d1) and equal to or smaller than the upper limit value (d2). As a result of the above determination, when active power deviation Δ is between the lower limit value and the upper limit value (YES in step S240), control unit 30 sets commanded active power value P3 to 0 (step S250).

On the other hand, when active power deviation Δ is not between the lower limit value and the upper limit value (NO in step S240), control unit 30 sets commanded active power value P3 from active power deviation Δ (step S260).

In subsequent step S270, converter control unit 60 of control unit 30 controls power converter 20 such that the active power according to commanded active power value P3 is output from energy storage device 10 or input to energy storage device 10. Hereinafter, steps S200 to S270 described above are repeated.

### [Effects of third embodiment]

As described above, energy storage system 1 according to the third embodiment operates so as to compensate for larger one of variations of the active power based on the detected active power values on both sides of interconnection point 101 between power converter 20 and power line 100. Therefore, active power can be quickly input and output.

### Fourth Embodiment

In a fourth embodiment, a grid control system 2 including a plurality of energy storage systems 1 and a centralized control device 70 will be described.

### [Schematic configuration of grid control system]

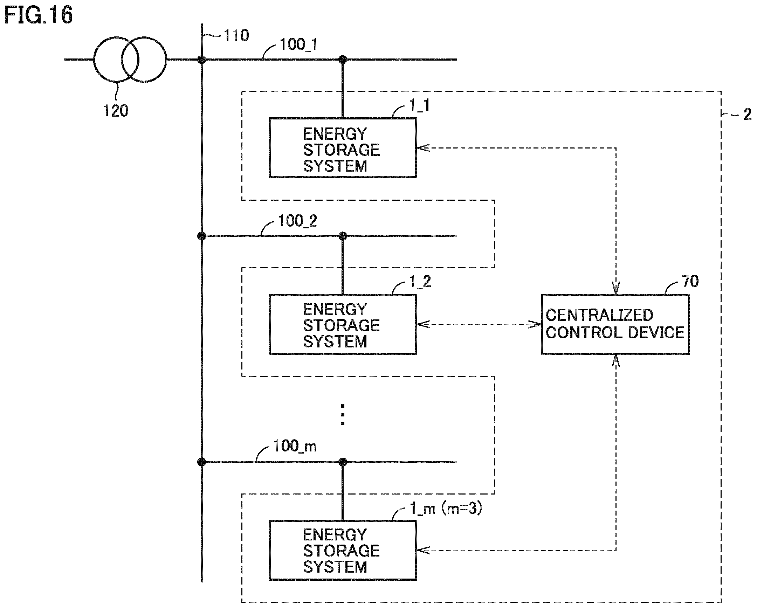

FIG. 16 is a block diagram showing an example of a configuration of a grid control system. Referring to FIG. 16, the grid control system includes m energy storage systems 1_1 to 1_m and centralized control device 70. In the case of FIG. 16, m = 3.

As illustrated in FIG. 16, a plurality of power lines (feeders) 100_1 to 100_m are drawn from a bus line 110. Bus line 110 is connected to a generator on the upstream side via a transformer 120. The power grid in FIG. 16 may be a power transmission network or a power distribution network.

Energy storage systems 1_1 to 1_m are provided respectively for power lines 100_1 to 100_m. A configuration of each of energy storage systems 1 is similar to that described in the first to third embodiments. Note that energy storage system 1 is not necessarily installed on corresponding power line 100, and energy storage system 1 may be connected at any position of corresponding power line 100.

Centralized control device 70 is connected to each of energy storage systems 1 via a communication line. The communication line may be wired or wireless. Centralized control device 70 periodically receives information of each energy storage system 1 and transmits a command to each energy storage system 1.

### [Example of hardware configuration of centralized control device]

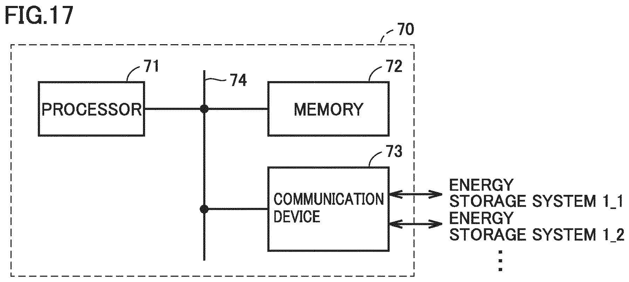

FIG. 17 is a block diagram illustrating an example of a hardware configuration of the centralized control device of FIG. 16. Referring to FIG. 17, centralized control device 70 includes a processor 71, a memory 72, a communications device 73, and a bus 74 that interconnects these components.

Processor 71 may be any of a CPU, a dedicated logic circuit such as an ASIC, and an FPGA, and may be a combination of two or more of these. A function of centralized control device 70 is implemented by the CPU as processor 71 executing a program, or by the ASIC or the FPGA operating.

Memory 72 stores data, programs, and the like that are used by processor 71. Memory 72 includes a volatile memory and a nonvolatile memory. Examples of the volatile memory include DRAM and SRAM, and examples of the nonvolatile memory include EEPROM and a flash memory. Further, memory 72 may include a solid state drive (SSD) or a hard disk.

Communication device 73 transmits and receives commands, data, and the like to and from communication device 34 of each energy storage system 1.

### [Functional configuration of centralized control device]

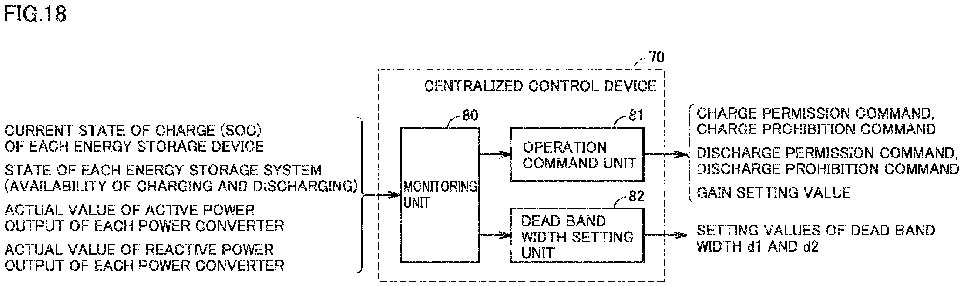

FIG. 18 is a block diagram showing an example of a functional configuration of the centralized control device of FIG. 16.

Referring to FIG. 18, centralized control device 70 functionally includes a monitoring unit 80, an operation command unit 81, and a dead band width setting unit 82. These functions are implemented by, for example, the CPU constituting processor 71 operating in accordance with a program.

Monitoring unit 80 receives information on each energy storage system 1. Specifically, monitoring unit 80 acquires a state of charge (SOC) of energy storage device 10 included in each energy storage system 1, an actual value of active power output, an actual value of reactive power output, and the like. In addition, monitoring unit 80 acquires information on a state of each energy storage system 1 (availability of charging and discharging due to failure or the like).

Operation command unit 81 transmits a command to each energy storage system 1. Specifically, operation command unit 81 outputs a charge permission command, the charge prohibition command, a discharge permission command, and a discharge prohibition command for each energy storage system 1, as well as a gain setting value of gain multiplier 53. Control unit 30 of each energy storage system 1 updates the setting of the control unit based on the command from centralized control device 70. Note that energy storage system 1 may determine whether or not charging or discharging is possible based on the state of charge of energy storage device 10, and notify centralized control device 70 of the information.

As a state in which charging is prohibited, there may be a state in which the state of charge of energy storage device 10 is close to 100% and energy storage device 10 may become an over charged state by further charging. On the other hand, as a state in which discharging is prohibited, there may be a state in which the state of charge of energy storage device 10 is close to 0% and energy storage device 10 may become an over discharged state by further discharging. Examples of the cases where both charge and discharge are prohibited include a case where energy storage device 10 has a high temperature close to the upper limit value of the operating temperature range, a case where maintenance of energy storage device 10 is performed, and a case where energy storage system 1 fails.

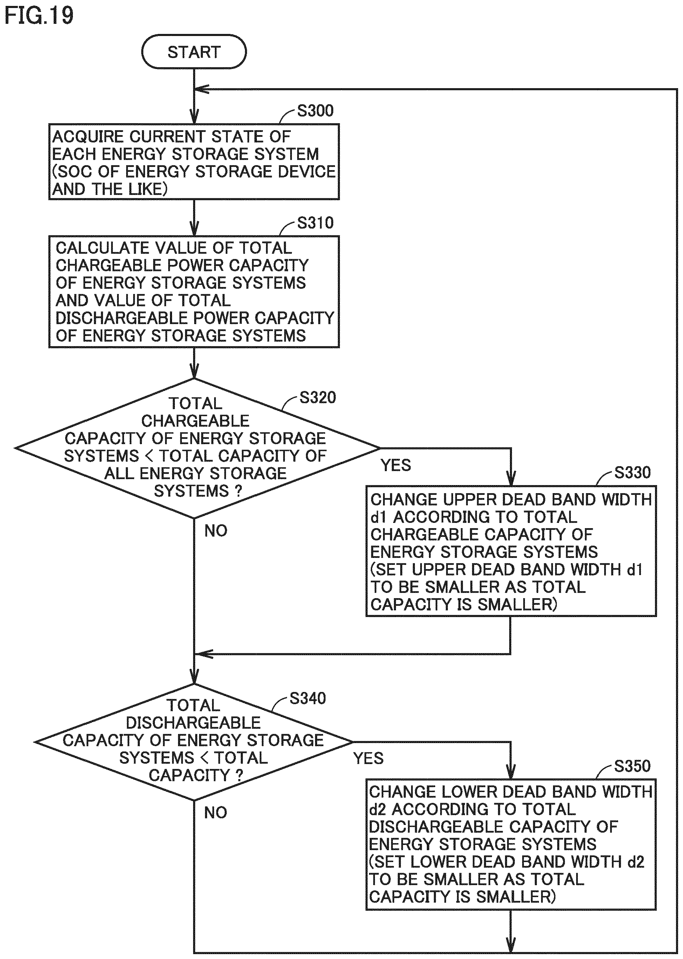

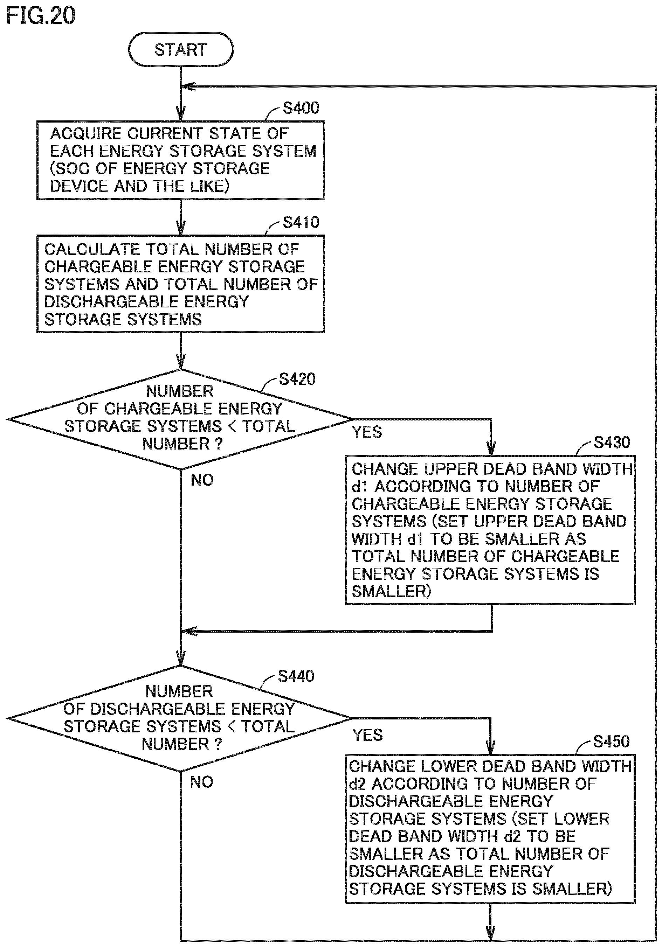

Dead band width setting unit 82 sets upper dead band width d1 and lower dead band width d2 of dead band determination unit 52, and outputs the set values to each energy storage system 1. Hereinafter, details of an operation of dead band width setting unit 82 will be described with reference to FIGS. 19 and 20.

### [Details of operation of dead band width setting unit]

FIG. 19 is a flowchart showing an example of the operation of the dead band width setting unit of FIG. 18.

In step S300 of FIG. 19, monitoring unit 80 of centralized control device 70 acquires a current state of each energy storage system 1, for example, the SOC of energy storage device 10 and information on whether or not the operation is possible (during maintenance, failure, etc.).

In subsequent step S310, dead band width setting unit 82 of control unit 30 calculates a value of a total chargeable power capacity of energy storage systems 1 and a value of a total dischargeable power capacity of energy storage system 1. Here, the total chargeable capacity refers to a total value of the power capacities of power converters 20 except for those having an SOC of 100% and those in failure. The total dischargeable capacity refers to a total value of the power capacities of power converters 20 except for those having an SOC of 0% and those in failure.

In subsequent step S320, dead band width setting unit 82 determines whether or not the total chargeable capacity of energy storage systems 1 is smaller than a total capacity of all energy storage systems 1 (the total value of the power capacity of all power converters 20). When the total chargeable capacity of energy storage systems 1 is smaller than the total power capacity (YES in step S320), dead band width setting unit 82 changes upper dead band width d1. Specifically, dead band width setting unit 82 sets upper dead band width d1 to be smaller as the total chargeable capacity of energy storage systems 1 is smaller (step S330).

When the total chargeable capacity of energy storage systems 1 is smaller than the total capacity of all energy storage systems 1, the active power that grid control system 2 can absorb from the power grid becomes relatively small. Therefore, even if the power supply of the power grid greatly exceeds the power demand, it is difficult to suppress an increase of the grid frequency since the active power that can be absorbed from the power grid to grid control system 2 is relatively small. In order to prevent such a situation, upper dead band width d1 is set to be smaller. As a result, when detected active power value P1 exceeds target active power value P2, the active power can be absorbed quickly.

In subsequent step S340, dead band width setting unit 82 determines whether or not the total dischargeable capacity of energy storage systems 1 is smaller than the total capacity of all energy storage systems 1. When the total dischargeable capacity of energy storage systems 1 is smaller than the total power capacity (YES in step S340), dead band width setting unit 82 changes lower dead band width d2. Specifically, dead band width setting unit 82 sets lower dead band width d2 to be smaller as the total dischargeable capacity of energy storage systems 1 is smaller (step S350).

When the total dischargeable capacity of energy storage systems 1 is smaller than the total capacity of all energy storage systems 1, the active power that grid control system 2 can discharge to the power grid becomes relatively small. Therefore, even if the power demand of the power grid greatly exceeds the power supply, it is difficult to suppress a decrease of the grid frequency since the active power that can be discharged from grid control system 2 to the power grid is relatively small. In order to prevent such a situation, lower dead band width d2 is set to be smaller. Accordingly, when detected active power value P1 falls below target active power value P2, it is possible to promptly discharge the active power.

FIG. 20 is a flowchart showing another example of the operation of the dead band width setting unit in FIG. 18.

In step S400 of FIG. 20, monitoring unit 80 of centralized control device 70 acquires a current state of each energy storage system 1, for example, the SOC of energy storage device 10 and information on whether or not the operation is possible (during maintenance, failure, etc.).

In subsequent step S410, dead band width setting unit 82 of control unit 30 calculates a total number of chargeable energy storage systems 1 and a total number of dischargeable energy storage systems 1. The calculation can be simplified by calculating the total number of energy storage systems instead of the total value of the power capacity.

In subsequent step S420, dead band width setting unit 82 determines whether or not the total number of chargeable energy storage systems 1 is smaller than the number of all energy storage systems 1. When the total number of chargeable energy storage systems 1 is smaller than the number of all energy storage systems 1 (YES in step S420), dead band width setting unit 82 changes upper dead band width d1. Specifically, dead band width setting unit 82 sets upper dead band width d1 to be smaller as the total number of chargeable energy storage systems 1 is smaller (step S430).

In subsequent step S440, dead band width setting unit 82 determines whether or not the total number of dischargeable energy storage systems 1 is smaller than the number of all energy storage systems 1. When the total number of dischargeable energy storage systems 1 is smaller than the number of all energy storage systems 1 (YES in step S440), dead band width setting unit 82 changes lower dead band width d2. Specifically, dead band width setting unit 82 sets lower dead band width d2 to be smaller as the total number of dischargeable energy storage systems 1 is smaller (step S450).

### [Effects of fourth embodiment]

In the fourth embodiment, grid control system 2 in which the plurality of energy storage systems 1 are provided in the power grid has been described. Centralized control device 70 that controls the plurality of energy storage systems 1 changes upper dead band width d1 and lower dead band width d2 according to the state of each energy storage system 1, and thus it is possible to input and output active power more rapidly.

The embodiments disclosed herein should be understood to be illustrative rather than being limitative in all respects. The scope of the present application is shown not in the foregoing description but in the claims, and it is intended that all modifications that come within the meaning and range of equivalence to the claims are embraced here.

### LIST OF REFERENCE SIGNS

1: energy storage system,
2: grid control system,
10: energy storage device,
20: power converter,
30: control unit,
31, 45, 71: processor,
32, 46, 72: memory,
33, 47: input/output interface,
34, 73: communication device,
35, 48, 74: bus,
40: power detector,
41: voltage transformer,
42: current transformer,
43: input converter,
44: AD converter,
50: command value generation unit,
51, 51A, 51B: high-frequency component removal filter,
52: dead band determination unit,
53: gain multiplier,
54, 54A, 54B: subtractor,
55: selection unit,
60: converter control unit,
70: centralized control device,
80: monitoring unit,
81: operation command unit,
82: dead band width setting unit,
100: power line,
101: interconnection point,
110: bus line,
120: transformer,
P1: detected active power value,
P2: target active power value,
P3: commanded active power value,
d1: upper dead band width,
d2: lower dead band width

## Claims

1. An energy storage system connected to a power line of a power grid, the energy storage system comprising:
at least one energy storage device to and from which electric energy is input and output;
at least one power converter provided between the power line and the at least one energy storage device;
a power detector to detect active power flowing through the power line; and
a control unit to control an operation of the at least one power converter, thereby causing active power either to be output from the at least one energy storage device to the power line or to be input to the at least one energy storage device from the power line such that a variation in active power detected by the power detector is compensated.

2. The energy storage system according to claim 1,
wherein the power detector detects active power on an upstream side of a flow of the active power with respect to an interconnection point between the at least one power converter and the power line.

3. The energy storage system according to claim 1,
wherein the power detector detects active power on a downstream side of a flow of the active power with respect to an interconnection point between the at least one power converter and the power line.

4. The energy storage system according to any one of claims 1 to 3,
wherein the control unit
calculates a target active power value by removing at least a part of a high-frequency component from a detected active power value acquired by the power detector, the high-frequency component being higher than a fundamental wave component of the power grid, and
controls the at least one power converter such that, when a deviation between the target active power value and the detected active power value exceeds a dead band width, an absolute value of the deviation is reduced.

5. The energy storage system according to claim 1,
wherein the power detector detects active power on both sides of an interconnection point between the at least one power converter and the power line.

6. The energy storage system according to claim 5,
wherein the control unit
calculates a first target active power value by removing at least a part of a high-frequency component from a detected active power value on a first side of the interconnection point acquired by the power detector, the high-frequency component being higher than a fundamental wave component of the power grid,
calculates a second target active power value by removing at least a part of a high-frequency component from a detected active power value on a second side of the interconnection point acquired by the power detector, the high-frequency component being higher than a fundamental wave component of the power grid,
selects one deviation having a larger absolute value out of a first deviation and a second deviation as an active power deviation, the first deviation being a deviation between the first target active power value and the detected active power value on the first side, and the second deviation being a deviation between the second target active power value and the detected active power value on the second side, and
controls the at least one power converter so as to reduce an absolute value of the active power deviation when the active power deviation exceeds a dead band width.

7. The energy storage system according to any one of claims 1 to 6,
comprising:
a plurality of energy storage devices as the at least one energy storage device; and
a plurality of power converters as the at least one power converter, the plurality of power converters respectively corresponding to the plurality of energy storage devices, wherein
the control unit determines, according to rated power capacities of the plurality of power converters, active power to be input to or output from each of the energy storage devices via corresponding one of the power converters.

8. The energy storage system according to any one of claims 1 to 7,
wherein the control unit determines the dead band width based on the detected active power value detected by the power detector.

9. A grid control system, comprising:
a plurality of energy storage systems connected to a power grid; and
a centralized control device to receive information from the plurality of energy storage systems and give commands to the plurality of energy storage systems, wherein
each of the plurality of energy storage systems includes:
at least one energy storage device to and from which electric energy is input and output;
at least one power converter provided between one power line among power lines of the power grid and the at least one energy storage device;
a power detector to detect active power flowing through the power line; and
a control unit to control an operation of the at least one power converter, thereby causing active power either to be output from the at least one energy storage device to the power line or to be input to the at least one energy storage device from the power line such that a variation in active power detected by the power detector is compensated.

10. The grid control system according to claim 9,
wherein the centralized control device determines, based on a state of charge of the at least one energy storage device included in each of the plurality of energy storage systems, whether or not input of active power is permitted and whether or not output of active power is permitted, and gives commands respectively to the plurality of energy storage systems, the commands each directing one of permission and prohibition of input and output of active power to and from corresponding one of the plurality of energy storage systems.

11. The grid control system according to claim 9,
wherein each of the plurality of energy storage systems determines, based on a state of charge of the at least one energy storage device included in the energy storage system, whether or not input of active power is permitted and whether or not output of active power is permitted, and notifies the centralized control device of information on whether or not input of active power is permitted and whether or not output of active power is permitted that have been determined.

12. The grid control system according to any one of claims 9 to 11,
wherein the control unit of each of the plurality of energy storage systems
calculates a target active power value by removing at least a part of a high-frequency component from a detected active power value acquired by the power detector, the high-frequency component being higher than a fundamental wave component of the power grid, and
controls the at least one power converter so as to reduce an absolute value of a deviation between the target active power value and the detected active power value in one of cases where the detected active power value exceeds an upper limit value obtained by adding an upper dead band width to the target active power value, and where the detected active power value falls below a lower limit value obtained by subtracting a lower dead band width from the target active power value.

13. The grid control system according to claim 12,
wherein the centralized control device
calculates, as a first total value, a total value of power capacities of energy storage systems by which input of active power from the power grid is permitted among the plurality of energy storage systems, and sets the upper dead band width for the target active power value to be smaller as the first total value is smaller, and
calculates, as a second total value, a total value of power capacities of energy storage systems by which output of active power to the power grid is permitted among the plurality of energy storage systems, and sets the lower dead band width for the target active power value to be smaller as the second total value is smaller.

14. The grid control system according to claim 12,
wherein the centralized control device
calculates, as a first total number, a total number of energy storage systems by which input of active power from the power grid is permitted among the plurality of energy storage systems, and sets the upper dead band width for the target active power value to be smaller as the first total number is smaller, and
calculates, as a second total number, a total number of energy storage systems by which output of active power to the power grid is permitted among the plurality of energy storage systems, and sets the lower dead band width for the target active power value to be smaller as the second total number is smaller.
